# EUROPEAN PATENT APPLICATION

(11) **EP 4 354 408 A1**
(43) Date of publication of application: **17.04.2024**
(21) Application number: 22820197.6
(22) Date of filing: 06.06.2022
(51) Int. Cl.: G08B 21/24, H04M 11/00, G08B 25/10, H04W 4/02, H04W 84/10, H04W 52/18

(54) **POSITION SEARCH SYSTEM AND POSITION SEARCH METHOD**

(30) Priority: 11.06.2021 JP 2021098148
(71) Applicant: NTT Communications Corporation, Tokyo 100-8019 (JP)
(72) Inventor: AOKI, Fumio, Tokyo 100-8019 (JP)
(74) Representative: Hoffmann Eitle
(86) International application number: PCT/JP2022/022851
(87) International publication number: WO 2022/260018

(57) **Abstract**

A position search system (201) includes a tag (210), a plurality of communication terminal devices (20) that receive the signal from the tag (210), and a server (30) that collects information from a communication terminal device (20), the tag (210) transmits a first signal as the signal that the tag (210) transmits when the tag senses presence of a communication terminal device (20A) that is paired with the tag (210) or when the tag is able to sense presence of a communication terminal device (20B) with which the tag (10) is able to communicate after pairing with the communication terminal device (20A) is canceled or after the tag stops sensing presence of the communication terminal device (20A) and transmits a second signal in which at least one of a transmission output and frequency of transmission is increased more than that in the first signal when the tag (210) does not sense presence of the communication terminal device (20) with which the tag (210) is able to communicate after pairing with the communication terminal device (20A) is canceled or after the tag stops sensing presence of the communication terminal device (20A).

## Description

### [Technical Field]

The present invention relates to a position search system and a position search method.

### [Background Art]

In recent years, systems that estimate a position by having an elderly person or a child carry a tag that emits a signal at given intervals using the Bluetooth (trademark) standards, or the like, and notifying a server of information on a position in which a neighboring communication terminal device, such as a smartphone, that receives the signal receives the signal has been under development as a means of estimating a position of an elderly person with dementia, a child, a pet, or a valuable.

There is also a system in which a communication terminal device of an owner and a tag are paired and, when the distance between the communication terminal device and the tag increases and thus communication between a portable terminal device and the tag cannot be made or presence cannot be sensed, the communication terminal device or the tag makes an alarm, thereby preventing misplacing.

As for a communication function that is requested for the tag, these methods only need Bluetooth (and Bluetooth Low Energy that is one type of Bluetooth) that is power-saving compared to a mobile communication network and do not need to install a large-capacity battery. As a result, the tag enables a long use and this makes it easy to have a child to carry the tag or attach the tag to a valuable. Furthermore, it is not necessary to charge the tag frequently.

### [Citation List]

### [Patent Citation]

Patent Literature 1: Japanese Laid-open Patent Publication No. 2011-250171

### [Summary of Invention]

### [Technical Problem]

As described above, tag positional information management using Bluetooth makes it possible to realize size reduction and long use of a terminal device and thus is really useful; however, it also has a problem.

The most significant problem is in that, when the tag is lost and if no communication terminal device of another person that transmits positional information on the tag is near the tag, it is impossible to know the positional information. The distance of arrival of a signal that is transmitted by a general tag is approximately 10 meters and there is preferably a communication terminal device of another person within the range of arrival of the signal at the timing when the tag transmits a signal; however, when no communication terminal device of another person is within the range of arrival of the signal, it is not possible to notify the server of positional information. Communication terminal devices of others preferably pass nearby frequently in a downtown, or the like; however, there is a case where there are few terminal devices that are able to receive a signal in a location with less people, such as a suburb, and that case has a low possibility that it is possible to know the position of the tag.

Thus, a method of, by increasing frequency of transmission of a signal that is transmitted from a tag, increasing probability that it is possible to receive a signal when a portable terminal device of another person goes by and a method of increasing a range in which a signal arrives by increasing a transmission output of a signal from a tag and thus increasing probability that it is possible to receive a signal when a portable terminal device of another person comes close are possible.

With any of the above-described methods, however, power consumption of the battery of the tag increases and it is necessary to increase the tag itself or perform charging frequently. When frequency of signal transmission and the transmission output are increased, particularly in the case where there are many tags in a narrow area, an event that it is not possible to receive a signal that is transmitted because signals overlap occurs.

The present invention was made in view of the above-described circumstances and an object of the present invention is to provide a position search system and a position search method that make it possible to efficiently make a search for the position of a tag while reducing power consumption of a battery of the tag.

### [Solution to Problem]

In order to solve the above-described problems and achieve the object, a position search system according to the present invention is a position search system including a tag that transmits a signal containing identification information; a plurality of communication terminal devices that receive the signal that the tag transmits; and a server that collects information from a communication terminal device that receives the signal that the tag transmits, wherein the tag includes a setting unit configured to set a first signal as the signal that the tag transmits when the tag senses presence of a first communication terminal device that is paired with the tag among the communication terminal devices or when the tag is able to sense presence of a second communication terminal device with which the tag is able to communicate after pairing with the first communication terminal device is canceled or after the tag stops sensing presence of the first communication terminal device, and set a second signal in which at least one of a transmission output and frequency of transmission is increased more than that in the first signal when the tag does not sense presence of the second communication terminal device with which the tag is able to communicate after pairing with the first communication terminal device is canceled or after the tag stops sensing presence of the first communication terminal device; and a transmitter configured to transmit the signal that is set by the setting unit, the communication terminal device includes a receiver configured to receive the signal that is transmitted from the tag; and a notification unit configured to notify the server of the identification information on the tag that is contained in the signal that is received from the tag and positional information on the communication terminal device at reception of the signal, and the server includes a collecting unit configured to collect the identification information on the tag and the positional information from the communication terminal devices; a specifying unit configured to specify a position of the tag using the positional information that is collected by the collecting unit; and an output unit configured to output information on the position of the tag that is specified by the specifying unit.

### [Advantageous Effects of Invention]

According to the present invention, it is possible to efficiently make a search for the position of a tag while reducing power consumption of a battery of the tag.

### [Brief Description of Drawings]

FIG. 1 is a schematic diagram illustrating an entire configuration of a position search system according to a first embodiment.
FIG. 2 is a block diagram illustrating an example of a configuration of a tag in the first embodiment.
FIG. 3 is a block diagram illustrating an example of a configuration of a communication terminal device according to the first embodiment.
FIG. 4 is a block diagram illustrating an example of a configuration of a server according to the first embodiment.
FIG. 5 is a diagram illustrating an example of a table that a position information storage unit stores.
FIG. 6 is a diagram illustrating an example of a screen that is displayed on a communication terminal device.
FIG. 7 is a sequence chart illustrating a process procedure of a position search process according to the first embodiment.
FIG. 8 is a sequence chart illustrating a process procedure of a position search process according to Modification 1 of the first embodiment.
FIG. 9 is a sequence chart illustrating a process procedure of a position search process according to Modification 2 of the first embodiment.
FIG. 10 is a sequence chart illustrating another process procedure of a position search process according to Modification 2 of the first embodiment.
FIG. 11 is a sequence chart illustrating another process procedure of a position search process according to Modification 3 of the first embodiment.
FIG. 12 is a schematic diagram illustrating an entire configuration of a position search system according to a second embodiment.
FIG. 13 is a block diagram illustrating an example of a configuration of a tag in the second embodiment.
FIG. 14 is a sequence chart illustrating a process procedure of a position search process according to the first embodiment.
FIG. 15 is a sequence chart illustrating a process procedure of a position search process according to Modification 1 of the second embodiment.
FIG. 16 is a sequence chart illustrating another process procedure of the position search process according to Modification 1 of the second embodiment.
FIG. 17 is a block diagram illustrating an example of a configuration of a tag in a third embodiment.
FIG. 18 is a sequence chart illustrating a process procedure of a position search process according to the third embodiment.
FIG. 19 is a diagram illustrating a computer that executes a position search program.

### [Embodiments for Carrying Out the Invention]

Embodiments of a position search system and a position search method according to the present application will be described in detail below based on the drawings. Note that the embodiments do not limit the position search system and the position search method according to the present application.

### First Embodiment

First of all, a first embodiment will be described. In the first embodiment, in a state of being paired with a communication terminal device of an owner of a tag, the tag transmits a signal in which at least one of a transmission output and frequency of transmission is increased when the tag determines moving of the tag itself after the pairing with the communication terminal device is canceled or after the tag stops sensing presence of the communication terminal device. As described above, by limiting a signal transmission operation like one that increases power consumption by the tag to the case where the communication terminal device of the owner of the tag is not nearby and the tag itself moves, power consumption of the battery of the tag is reduced when the possibility of theft, or the like, is low.

In the following embodiments, a configuration of the position search system, a configuration of the tag, a configuration of the communication terminal device, a configuration of a server, and a flow of a process in the position search system according to the first embodiment will be described in order and effects of the first embodiment will be described last.

### Configuration of Position Search System

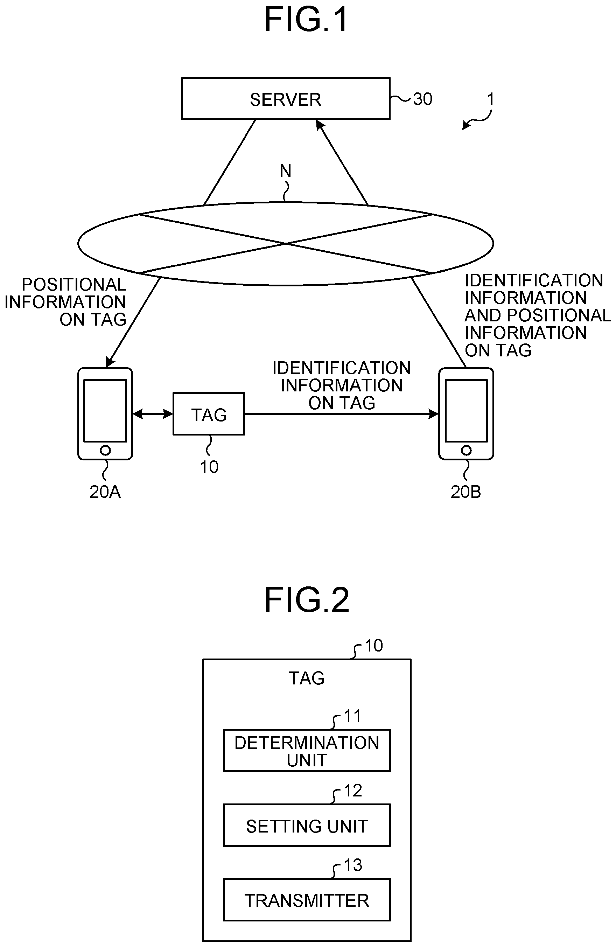

FIG. 1 is a schematic diagram illustrating an entire configuration of a position search system according to a first embodiment. A position search system 1 according to the first embodiment includes a tag 10 that transmits a signal containing identification information (for example, an ID), communication terminal devices 20A and 20B that receive the signal of the tag 10, and a server 30 that collects information from each of the communication terminal devices 20A and 20B.

The communication terminal devices 20A and 20B and the server 30 are connected with one another via a communication network N and is capable of performing data communication with another device. Note that the configuration illustrated in FIG. 1 is an example only and a specific configuration and the number of the devices are not particularly limited. When described without being distinguished particularly, the communication terminal devices 20A and 20B are referred to as a communication terminal device 20 as appropriate below. Note that the number of the communication terminal devices 20 in FIG. 1 is an example only.

The tag 10 is a terminal device that transmits a wireless signal containing an ID of the tag 10 (tag ID below), for example, using the Bluetooth standards, or the like. For example, a specific object (for example, a bicycle or a valuable), an elderly person, or a child is a subject of search and the tag 10 moves in association with moving of the subject of search and transmits a signal, for example, regularly. In the first embodiment, for example, the tag 10 is attached to the specific object, such as a bicycle or variables, and thus moves together with subject of search.

The communication terminal device 20 receives the signal that is transmitted from the tag 10 and is, for example, a terminal device, such as a smartphone, a tablet, or a mobile phone. The communication terminal device 20A (a first communication terminal device) is a terminal device that a user who manages the tag 10 (for example, the owner of the specific object that is attached to the tag 10, or the like) owns and is paired with the tag 10.

The communication terminal device 20B (a second communication terminal device) is, for example, a terminal device that an ally in searching, such as a volunteer in a town, owns. A deliverer of a delivery service company that makes deliveries to various areas may own the communication terminal device 20. For example, an application for searching for a position of the tag 10 is downloaded into the communication terminal device 20 and starting the application executes a process of receiving and searching for the position of the tag 10. A method in which the application is installed previously in the communication terminal device 20B and the process is executed without intentional starting of the application by the owner may be employed.

The server 30 collects positional information from the communication terminal devices 20A and 20B, specifies the position of the tag 10 using the collected positional information, and outputs information on the specified positon of the tag 10.

In the position search system according to the first embodiment, the tag 10 transmits a first signal when the tag 10 is able to communicate with the communication terminal device 20A with which the tag 10 is paired, when the tag 10 senses presence of the communication terminal device 20A, or when the tag 10 is able to sense presence of the communication terminal device 20B with which the tag 10 is able to communicate after pairing with the communication terminal device 20A is canceled or after presence of the communication terminal device 20A stops being sensed. The tag 10 transmits the first signal when the tag 10 gets to be unable to communicate with the communication terminal device 20A or when the tag 10 stops sensing presence of the communication terminal device 20A. Note that, by receiving a signal containing the name, model name, and ID of the communication terminal device 20A from the communication terminal device 20A with which the tag 10 is paired, the tag 10 senses presence of the communication terminal device 20A that is paired.

When the tag 10 is attached to a bicycle or a valuable in a house, the case where, carrying the communication terminal device 20A that is paired, the owner is away from the tag 10 often occurs. This is because it is rare to always carry around a bicycle or a valuable in a house. When the communication terminal device 20A of the owner and the tag get to be unable to communicate with each other, there would be a possibility of loss or steal and, when the tag 10 keeps outputting a signal whose reach is long every time or increases frequency of signal transmission, consumption of the battery increases.

On the other hand, a bicycle or a valuable left in a house themselves do not move normally. For this reason, when the owner of the tag 10 is not nearby and the tag 10 senses moving of the tag 10 itself, it is considered that a possibility of steal by others is high.

Thus, in the first embodiment, when it is estimated that a case of steal of the bicycle, the valuable, or the like, to which the tag 10 is attached has occurred, the tag 10 transmits a second signal for increasing a probability that the tag 10 will be found. Specifically, the tag 10 transmits the second signal on determining moving of the tag 10 itself after pairing with the communication terminal device 20A is canceled, or when the tag 10 stops sensing presence of the communication terminal device 20A. The second signal is a signal in which at least one of the transmission output and frequency of transmission is increased more than that in the first signal.

When a case of steal of the valuable to which the tag 10 is attached has occurred, the user who owns the valuable, or the like, notifies a manager of security services of the occurrence. On receiving such a notification, the server 30 causes the communication terminal devices 20A and 20B in which the application is installed to start the application. Each of the communication terminal devices 20A and 20B may be requested to start the application, the user may start the application, or the application may be automatically started in response to a start request made by the server 30. The cation previously, accordingly, in the position search system, in addition to the communication terminal device 20A, the communication terminal device 20B plays a role of a sensor that receives the signal of the tag 10 and thus the area of searching the tag 10 increases temporarily.

For example, the communication terminal device 20B receives the second signal of the tag 10 that is lost and transmits the tag ID of the tag 10 and the positional information on the communication terminal device 20B at the time of receiving to the server 30, which enables the server 30 to specify the positional information on the tag 10. The server 30 notifies the communication terminal device 20A of the owner of the valuable of the specified positional information on the tag 10.

As described above, only in the given case where it is considered that the case of steal of the valuable, or the like, has occurred, the tag 10 transmits the second signal in which at least one of the transmission output and frequency of transmission is increased more than that in the first signal in order to increase the probability that the tag 10 will be found. Power consumption of transmission of the second signal increases more than that of transmission of the first signal; however, the tag 10 limits transmission of the second signal to only the given case where it is considered that the case of steal of the valuable, or the like, has occurred, specifically, to only the case where the tag 10 determines moving of the tag 10 itself after pairing with the communication terminal device 20A is canceled or after the tag stops sensing presence of the communication terminal device 20A. The tag 10 is able to prevent waste consumption of the battery by emitting the first signal in which power consumption of the tag is reduced when the possibility of steal, or the like, is low.

### Configuration of Tag

With reference to FIG. 2, the configuration of the tag 10 will be described next. FIG. 2 is a block diagram illustrating an example of the configuration of the tag 10 in the first embodiment. The tag 10 includes an electronic circuit and an internal memory for storing programs in which various types of process procedures are defined and control data. The various types of programs operate run and thus the tag 10 performs various types of processing. As illustrated in FIG. 2, the tag 10 includes a determination unit 11, a setting unit 12, and a transmitter 13.

The determination unit 11 determines whether there is moving of the tag 10 itself by determining a position or moving of the tag 10. The determination unit 11 is, for example, an acceleration sensor or a tilt sensor. Alternatively, the determination unit 11 has a GPS function and, by comparing a position of detection of the tag 10 and a position of previous detection of the tag 10, determines whether there is moving of the tag 10. When it is sensed whether there is a change in an access point of a wireless LAN that is present around the tag 10 or in beacon information notifying the position and there is a change in the access point of the wireless LAN or there is a change in the beacon information notifying positional information, the determination unit 11 determines moving of the tag 10. The positional information according to the GPS or the wireless LAN access point information and the beacon information notifying the positional information are stored in the internal memory of the tag 10.

The setting unit 12 sets a signal that the tag 10 transmits according to whether there is sensing of the communication terminal device 20 and determination of moving of the tag 10 by the determination unit 11. When presence of the communication terminal device 20A is sensed, the setting unit 12 sets the first signal as the signal that the tag 10 transmits. The first signal is, for example, a signal having a transmission interval of "one second" and a reach of "10 m".

The setting unit 12 determines whether it is the case where it is estimated that a case of steal of the valuable to which the tag 10 is attached has occurred. When it is estimated that the case of steal of the valuable to which the tag 10 is attached has occurred, the setting unit 12 sets the second signal for increasing the probability that the tag 10 will be found as the signal that the tag 10 transmits.

Specifically, when the determination unit 11 determines moving of the tag 10 after pairing with the communication terminal device 20A is canceled or after presence of the communication terminal device 20A stops being sensed, the setting unit 12 sets the second signal for increasing the probability that the tag 10 will be found as the signal that the tag 10 transmits.

When moving of the tag 10 by a given distance (for example, 10 m) or larger is determined after pairing with the communication terminal device 20A is canceled or after presence of the communication terminal device 20A stops being sensed, the setting unit 12 may set the second signal as the signal that the tag 10 transmits. This is because, when it is smaller than the given distance of the tag 10, the case where the family of the owner changes the position of the bicycle or the valuable is considered. The given distance may be set previously or the user who is the owner of the bicycle, the valuable, or the like, may set the given distance appropriately.

The second signal is a signal in which at least one of the transmission output and frequency of transmission is increased more than that in the first signal. The second signal is, for example, a signal in which the transmission output is increased more than that in the first signal such that the transmission interval is "one second" and the reach is "50 m". The second signal may be, for example, a signal in which the frequency of transmission is increased more than that of the first signal such that the reach is "10 m" and the transmission interval is "0. 5 second". Alternatively, the second signal may be, for example, a signal in which both the transmission output and the frequency of transmission are increased more than those of the first signal and that has a transmission interval of "0. 5 second" and a reach of "50 m".

The setting unit 12 may set, as the second signal, a signal in which at least one of the transmission output and frequency of transmission is increased according to the distance by which the tag 10 moves. The setting unit 12 may set the second signal such that at least one of the transmission output and frequency of transmission is increased as the time during which the communication terminal device 20A cannot be sensed gets longer. The setting unit 12 may set a plurality of types of signals as the second signal. For example, the setting unit 12 may set, as the second signal, a signal having a transmission interval of "1 second" and a reach of "50 m" and a signal having a reach of "50 m" and a transmission interval of "0.5 second".

The transmitter 13 transmits the signal that is set by the setting unit 12.

### Configuration of Communication Terminal Device

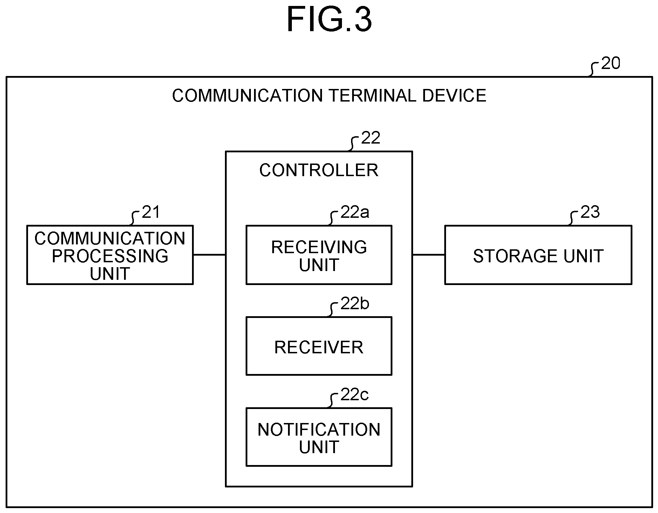

Using FIG. 3, the configuration of the communication terminal device 20 will be described next. FIG. 3 is a block diagram illustrating an example of the configuration of the communication terminal device according to the first embodiment. As illustrated in FIG. 3, the communication terminal device 20 includes a communication processing unit 21, a controller 22, and a storage unit 23. Processes by the respective units that the communication terminal device 20 includes will be described below.

The communication processing unit 21 controls communication of various types of information. For example, the communication processing unit 21 performs wireless communication and receives the signal that is transmitted from the tag 10.

The storage unit 23 stores data and a program that are necessary for various types of processing by the controller 22. For example, the storage unit 23 is a semiconductor memory device, such as a RAM (Random Access Memory) or a flash memory, or a storage device, such as a hard disk or an optical disk.

The controller 22 includes an internal memory for storing a program that defines various types of process procedures and necessary data and executes various processes using the program and the data and includes a receiving unit 22a, a receiver 22b, and a notification unit 22c as what is particularly closely related to the present invention. The controller 22 herein is an electronic circuit, such as a CPU (Central Processing Unit) or a MPU (Micro Processing Unit), or an integrated circuit, such as an ASIC (Application Specific Integrated Circuit) or a FPGA (Field Programmable Gate Array).

The receiving unit 22a receives a request to start an application for searching for the position of the tag 10 (referred to as a search application as appropriate below) from the server 30. The search application may be started by a user who confirms the start request or may start automatically in response to the start request of the server 30. The search application may be kept running. The receiving unit 22a may receive a tag ID that identifies the tag 10 to be searched for together with the request to start the search application.

When the search application is started, the receiver 22b receives the signal that is transmitted from the tag 10. For example, when the search application is started, the receiver 22b starts a process of receiving the signal that is transmitted from the tag 10 and, when the tag 10 and the communication terminal device 20 get close to each other and thus the receiver 22b receives the signal from the tag 10, notifies the notification unit 22c of reception of the signal.

When the receiving unit 22a receives the tag ID of the subject of search, the receiver 22b may determine whether the tag ID contained in the received signal coincides with the tag ID of the subject of search and, only when the tag IDs coincide, may notify the notification unit 22c of reception of the signal.

As for the first signal and the second signal that are transmitted from the tag 10, for example, when the ID indicating the signal type (the first signal or the second signal) is contained in the received signal, the receiver 22b may determine the signal type from the ID. For example, the receiver 22b may determine a signal type from the number of signals that are received from the same tag 10 in a given period as a method of determining the type of the received signal.

When the signal is received by the receiver 22b, the notification unit 22c notifies the server 30 of the positional information on the communication terminal device 20 at the time of reception of the signal. For example, when the signal is received by the receiver 22b, the notification unit 22c notifies the server 30 of the positional information on the communication terminal device 20 together with the tag ID of the tag 10 that is contained in the signal. The notification unit 22c may estimate a distance between the tag 10 and the communication terminal device according to the type of the signal that is received by the receiver 22b and notify the server 30 of information on the position of the tag 10. The positional information may be, for example, information indicating coordinates (a latitude and a longitude) of the communication terminal device 20 that is specified using the GPS (Global Positioning System) or information indicating a rough area that is specified by a base station to which the communication terminal device 20 connects.

### Configuration of Server

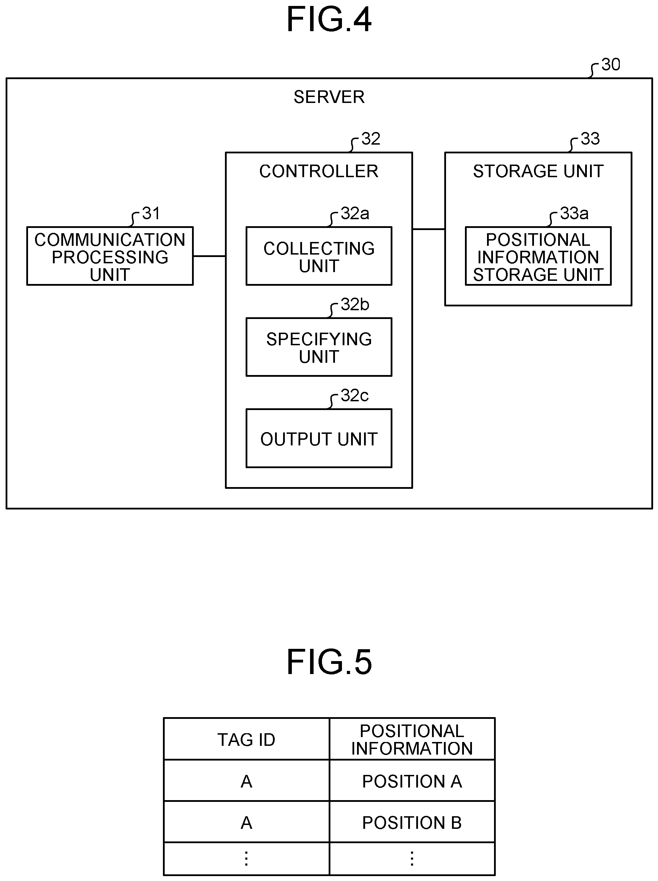

Using FIG, 4, the configuration of the server 30 will be described. FIG. 4 is a block diagram illustrating an example of the configuration of the server according to the first embodiment. As illustrated in FIG. 4, the server 30 includes a communication processing unit 31, a controller 32, and a storage unit 33. Processes by the respective units that the server 30 includes will be described below.

The communication processing unit 31 controls communication of various types of information that is communicated with each communication terminal device 20 that is connected. For example, the communication processing unit 31 receives the tag ID and the positional information on the tag 10 from the communication terminal device 20.

The storage unit 33 stores data and a program that are necessary for various types of processing by the controller 32 and includes a positional information storage unit 33a as what is particularly closely related to the present invention. For example, the storage unit 33 is a semiconductor memory device, such as a RAM or a flash memory, or a storage device, such as a hard disk or an optical disk.

The positional information storage unit 33a stores information for searching for the position of the tag 10 that is collected from each communication terminal device 20. For example, as exemplified in FIG. 5, the positional information storage unit 33a stores a "tag ID" that uniquely identifies the tag 10 and "positional information" indicating the position of the communication terminal device 20A at the time when the signal transmitted from the tag 10 is received in association with each other. FIG. 5 is a diagram illustrating an example of a table that the position information storage unit stores.

The example in FIG. 5 will be taken and described and, for example, the positional information storage unit 33a stores a tag ID "A" and positional information "position A" in association with each other. This means that the communication terminal device 20 receives the signal that is transmitted by the tag 10 with the tag ID "A" in the "position A". Note that, in the example in FIG. 5, the position A and the position B are referred to as the positional information simply and, practically, for example, the positional information storage unit 33a stores information that specifies a latitude and a longitude as the positional information.

The controller 32 includes an internal memory for storing a program that defines various types of process procedures and necessary data and executes various processes using the program and the data and includes a collecting unit 32a, a specifying unit 32b, and an output unit 32c as what is particularly closely related to the present invention. The controller 32 herein is an integrated circuit, such as a CPU (Central Processing Unit) or a MPU (Micro Processing Unit), or an integrated circuit, such as an ASIC or a FPGA.

The collecting unit 32a collects positional information from the communication terminal devices 20. For example, the collecting unit 32a transmits a notification instruction to notify information at given time intervals to each of the communication terminal device 20, thereby collecting positional information. Note that the collecting unit 32a may transmit a notification instruction at the timing when a given operation of the user is performed or may collect positional information without transmitting the notification instruction by receiving information that each communication terminal device 20 transmits at its own timing.

Using the positional information that is collected by the collecting unit 32a, the specifying unit 32b specifies the position of the tag 10. For example, every time positional information is collected by the collecting unit 32a, the specifying unit 32b sequentially performs narrowing for the location of the tag 10, thereby specifying the position of the tag 10.

The output unit 32c outputs the information on the position of the tag 10 that is specified by the specifying unit 32b. For example, the output unit 32c may display an image obtained by adding a circle indicating an area on which it is estimated that the tag 10 is present to a map corresponding to the position of the tag 10 that is specified by the specifying unit 32b.

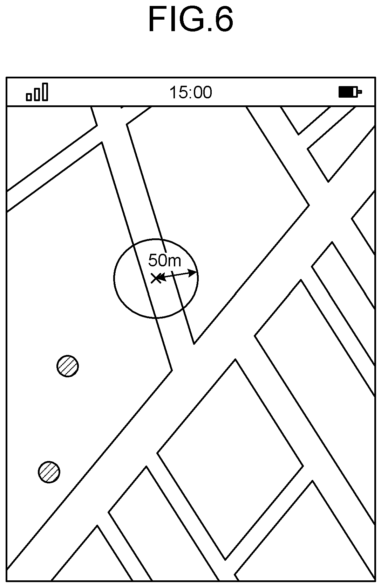

Using FIG. 6, an example of the screen that is displayed on the communication terminal device 20A will be described here. FIG. 6 is a diagram illustrating the example of the screen that is displayed on the communication terminal device 20A. As exemplified in FIG. 6, for example, when it is specified that the tag 10 is present within a radius of 50 m from a spot of "x" on the map, the server 30 displays an image obtained by adding a circle in a size aligned with the scale of a map as the circle of the radius of 50 m around the spot of "×" to the map of the location corresponding to the position of the tag 10.

The output unit 32c outputs the information on the position of the tag 10 to only the communication terminal device 20A of the owner of the bicycle or the valuable. In other words, not by outputting the position of the tag 10 to all the communication terminal devices 20, but by outputting the position of the tag 10 to only the communication terminal device 20A of the specific user, the server 30 is able to prevent personal information from being informed to an indefinite number.

### Position Search Process

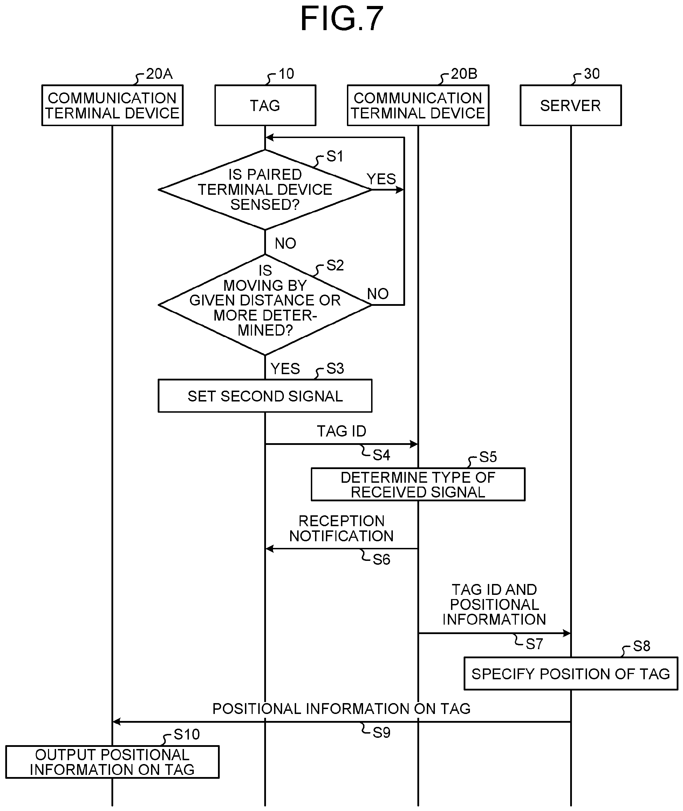

A flow of a series of processes in the position search system 1 will be described next. FIG. 7 is a sequence chart illustrating a process procedure of a position search process according to the first embodiment.

As exemplified in FIG. 7, when a case of steal of a bicycle, a valuable, or the like, to which the tag 10 is attached has occurred, the user who owns the valuable, such as the bicycle or the valuable, or the like, notifies the manager of the security services of the occurrence. On receiving such a notification, the server 30 causes the communication terminal device 20B in which the application is installed to start the application. In the tag 10, the first signal is set as the initial signal as the signal that the tag 10 transmits.

The tag 10 transmits the first signal and determines whether presence of the communication terminal device 20A is sensed based on whether there is reception of a reception notification from the communication terminal device to the first signal (step S1). A that time, the tag 10 determines whether pairing with the communication terminal device 20A is canceled.

When presence of the communication terminal device 20A stops being sensed (step S1: No), or when pairing with the communication terminal device 20A is canceled, it is determined whether moving of the tag 10 itself by a given distance or more is determined (step S2). Note that, at step S2, based on the current moving of the tag 10 and a log of moving of the tag 10 that is stored in the internal memory in addition to the current moving of the tag 10, it may be determined whether there was moving of the tag in the past back to a given period.

When presence of the communication terminal device 20A is sensed (step S1: Yes) or when moving of the tag 10 itself by the given distance or more is not determined (step S2: No), back to step S1.

On the other hand, when moving of the tag 10 itself by the given distance or more is determined (step S2: Yes), the tag 10 sets the second signal as the signal that the tag 10 transmits (step S3). The tag 10 transmits the second signal containing the tag ID (step S4).

When the communication terminal device 20B receives the second signal of the tag 10 and an ID indicating a signal type is contained in the received signal, the communication terminal device 20B determines the signal type from the ID (step S5). The communication terminal device 20B transmits a reception notification indicating that the communication terminal device 20B receives the second signal to the tag 10 from which the signal is transmitted (step S6). The communication terminal device 20B then notifies the server 30 of positional information on the communication terminal device 20B together with the tag ID of the tag 10 (step S7).

Based on the notification by the communication terminal device 20B, the server 30 specifies the positon of the tag 10 (step S8). The server 30 transmits information on the specified position of the tag 10 to the communication terminal device 20A (step S9) and causes the communication terminal device 20A to output the information on the position of the tag 10 (step S10).

### Effect of First Embodiment

As described above, in the first embodiment, the tag 10 transmits the second signal in which at least one of the transmission output and frequency of transmission is increased when the tag determines moving of the tag 10 itself after pairing between the tag 10 and the communication terminal device 20A that is paired with the tag 10 is canceled or after the tag 10 stops sensing presence of the communication terminal device 20A. In other words, in the first embodiment, the signal transmission operation like one that increases power consumption by the tag 10 is limited to the case where the communication terminal device 20A of the owner of the tag 10 is not nearby and the tag 10 itself moves.

Accordingly, in the first embodiment, by transmitting the second signal for increasing the probability that the tag 10 will be found only when it is estimated that a case of steal of the bicycle or the valuable to which the tag 10 is attached has occurred, it is possible to efficiently search for the position of the tag 10 while reducing power consumption of the battery of the tag 10.

### Modification 1 of First Embodiment

In the case where the tag 10 does not sense moving of the tag 10 itself after the positional information on the communication terminal device 20B is transmitted by the communication terminal device 20B to the server, it is considered that positional information that is transmitted last is the most valid. Thus, the setting unit 12 of the tag 10 sets the first signal as the signal that the tag 10 transmits when moving of the tag 10 is not determined or moving of moving of the tag 10 by a distance smaller than a given distance (for example, smaller than 1 m).

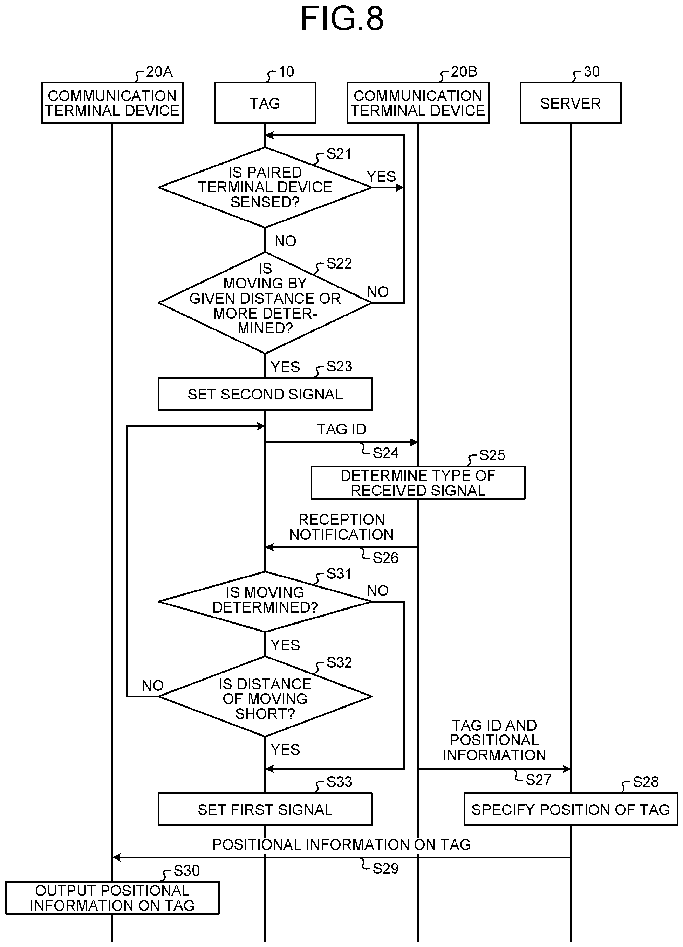

FIG. 8 is a sequence chart illustrating a process procedure of a position search process according to Modification 1 of the first embodiment. S21 to S30 illustrated in FIG. 8 are the same process as that of steps S1 to S10 illustrated in FIG. 7. On receiving a reception notification on reception of the second signal from the communication terminal device 20B, the tag 10 determines whether moving of the tag 10 itself is determined (step S31).

When moving of the tag 10 itself is determined (step S31: Yes), the tag 10 determines whether the distance of moving of the tag 10 is short (step S32). For example, when moving of the tag 10 by a given distance or shorter (for example, 1 m or shorter) is determined, the tag 10 determines that the distance of moving of the tag 10 is short.

When moving of the tag 10 itself is not determined (step S31: No) or the tag 10, when the distance of moving of the tag 10 is short (step S32: Yes), the tag 10 sets the first signal as the signal that the tag 10 transmits (step S33), returns to step S21, transmits the first signal, and determines sensing of the communication terminal device 20A that is paired. When the distance of moving of the tag 10 is long (step S32: No), the tag 10 returns to step S24 and continues transmission of the second signal.

As described above, even in the case where the tag 10 senses last that the communication terminal device 20B with which the tag 10 is able to communicate is present, the tag 10 changes the signal to be transmitted to the first signal when the tag 10 determines that the distance of moving is small even when the tag 10 does not determine moving of the tag 10 itself or even when the tag 10 determines moving of the tag 10 itself. Therefore, even when the state where the communication terminal device 20B with which communication can be made is not present nearby lasts for a given time or more, not to transmit the second signal for increasing probability of finding makes it possible to further reduce power consumption of the battery.

### Modification 2 of First Embodiment

Description will be given about a modification that is applicable to the case of a configuration in which the GPS is installed in the tag 10 itself or a configuration in which moving of the tag 10 is determined when it is sensed whether there is a change in an access point of a wireless LAN that is present around the tag 10 and there is accordingly a change in the access point of the wireless LAN.

With this configuration, it is possible to store information on positions that were passed in the past by positional determination by the GPS or acquire information on access points of the wireless LAN and store access points that were sensed in the past. Thus, the tag itself saves areas of moving in the past and the setting unit 12 of the tag 10 refers to the areas of moving in the past and sets a signal to be transmitted.

For example, when a way of use in which shuttles between home and a nearby shopping center are made with a bicycle of which position is to be searched for is taken usually, it can be determined that there is no deviation from a normal route of moving as long as moving is performed in the same route. Specifically, even when the communication terminal device 20A that is paired is not nearby as in the case where a family member borrows and rides the bicycle, only moving in the same route is regarded as the use by the family and the tag 10 does not perform the operation for increasing probability of finding.

In other words, even in the case where the tag 10 is not able to sense the communication terminal device 20A that is paired and determines moving of the tag 10, when it is determined that the tag does not deviate from the area to which the tag moved in the past and that the tag saves from GPS information or wireless LAN access point information, the tag 10 sets continuation of transmission of not the second signal for increasing probability that the tag 10 will be found but the first signal. Accordingly, the tag 10 transmits the second signal only in the case of an actual steal, or the like, and therefore is able to reduce consumption of the battery.

For example, the case in which a child of which positon is to be searched for shuttles between school and home is assumed. In such a case, the time in which the tag 10 stays at home or school is longer than that in other locations. For this reason, even when the tag 10 itself senses its moving in a situation where the communication terminal device 20A of a parent that is paired is not nearby, the tag 10 does not transmit the second signal for increasing probability that the tag 10 will be found at home or school.

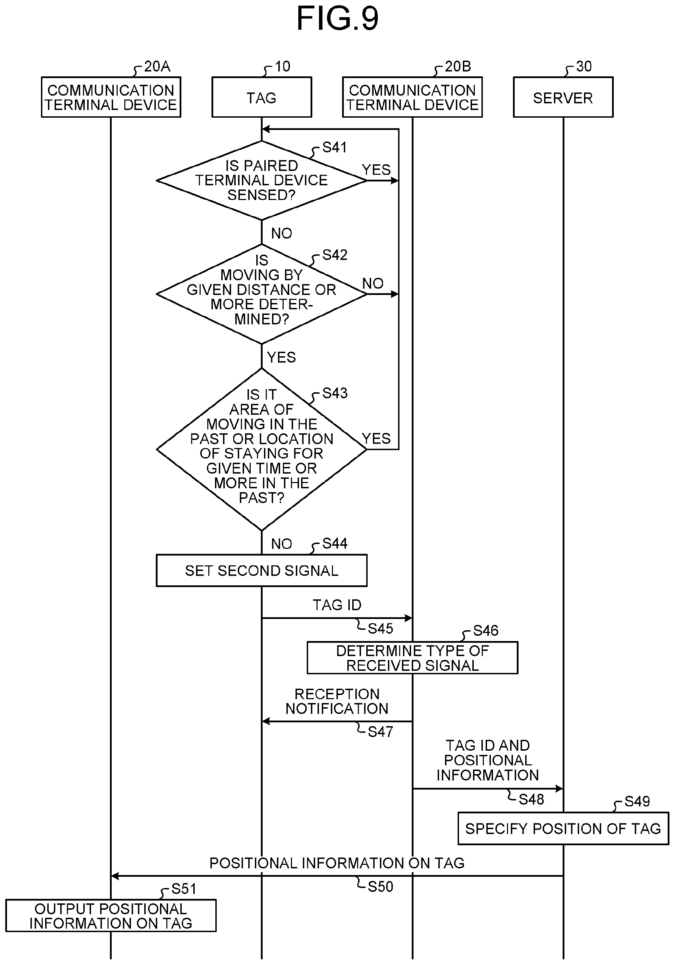

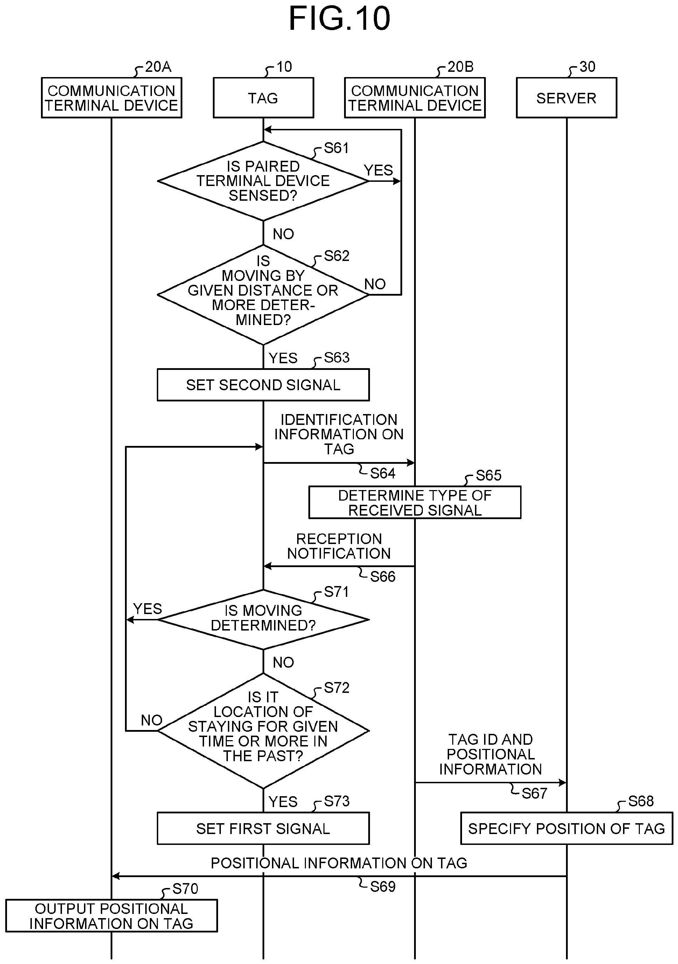

In other words, the tag 10 itself saves locations in which the tag 10 stayed for a given time or more in the past from the GPS information or the wireless LAN access point information and, when the tag 10 is positioned in a location in which the tag 10 stayed for the given time or more in the past, the tag 10 sets continuation of transmission of not the second signal for increasing probability that the tag 10 will be found but the first signal. Accordingly, the tag 10 transmits the second signal for increasing probability that the tag 10 will be found only on the way of a shuttle from and school, which makes it possible to reduce consumption of the battery. The process search method in these cases will be described with reference to FIG. 9 and FIG. 10.

FIG. 9 is a sequence chart illustrating a process procedure of the position search process according to Modification 2 of the first embodiment. Steps S41 and S42 illustrated in FIG. 9 are the same process as that of steps S1 and S2 illustrated in FIG. 7.

When moving of the tag 10 itself by the given distance or more is determined (step S42: Yes), the tag 10 determines whether the tag 10 is positioned in an area to which the tag 10 moved in the past or in a location where the tag 10 stayed for the given time or more in the past (step S43). When the tag 10 is positioned in the area to which the tag 10 moved in the past or the location where the tag 10 stayed for the given time or more in the past (step S43: Yes), the tag 10 returns to step S41 and continues transmission of the first signal.

When the tag 10 is not positioned in the area to which the tag 10 moved in the past or the location where the tag 10 stayed for the given time or more in the past (step S43: No), the second signal is set as the signal that the tag 10 transmits (step S44). Steps S45 to S51 in FIG. 9 are the same process as that of steps S4 to S10 in FIG. 7.

FIG. 10 is a sequence chart illustrating another process procedure of the position search process according to Modification 2 of the first embodiment. Steps S61 to S70 in FIG. 10 are the same process as that of steps S1 to S10 in FIG. 7. On determining moving of the tag 10 after receiving a reception notification from the communication terminal device 20B (step S71: Yes), the tag 10 returns to step S64 and continues transmission of the second signal for increasing probability that the tag 10 will be found.

On the other hand, when the tag 10 does not determine moving of the tag 10 after receiving a reception notification from the communication terminal device 20B (step S71: No), the tag 10 determines whether the tag 10 is positioned in a location where the tag 10 stayed for the given time or more in the past (step S72). When the tag 10 is not positioned in a location where the tag 10 stayed for the given time or more in the past (step S72: No), return to step S64 and continue transmission of the second signal. On the other hand, when the tag 10 is positioned in a location where the tag 10 stayed for the given time or more in the past (step S72: Yes), not the second signal for increasing probability that the tag 10 will be found but the first signal is set (step S73).

### Modification 3 of First Embodiment

For example, the case where a thief, or the like, carries the communication terminal device 20 prepared to be able to communicate and carries the bicycle or the valuable to which the tag 10 is attached together with the communication terminal device 20 to prevent the tag 10 from transmitting the second signal, thereby making a theft, or the like, be less sensed by another communication terminal device 20 is also considered.

Thus, the tag 10 transmits the second signal for increasing probability that the tag 10 will be found in the case where it is determined that, as for the communication terminal device 20 with which communication can be made and of which presence is sensed nearby, the communication terminal device that is near the tag 10 is only the same communication terminal device 20 for a given time (for example, 30 minutes) or more.

In other words, the setting unit 12 of the tag 10 transmits the second signal and sets continuation of transmission of the second signal when the communication terminal device 20 with which the tag 10 can communicate is the same communication terminal device for a given period or more after presence of the communication terminal device 20B with which that tag 10 can communicate is sensed. Accordingly, for example, it is possible to prevent steal of the bicycle, the valuable, or the like, to which the tag 10 is attached, from being less sensed by other communication terminal devices because a theft, or the like, carries the communication terminal device 20 prepared to be able to communicate and carries the communication terminal device 20 together with the tag 10.

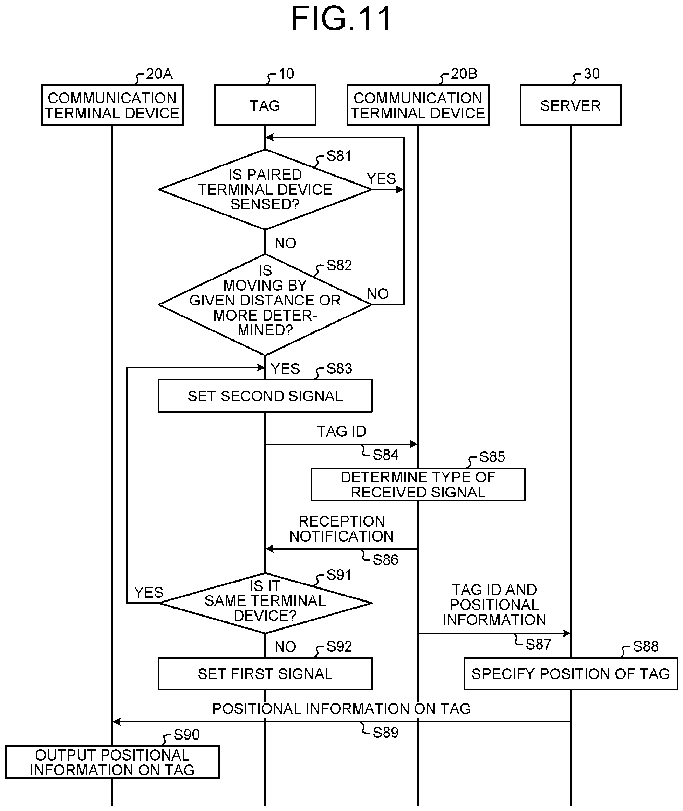

FIG. 11 is a sequence chart illustrating another process procedure of a position search process according to Modification 3 of the first embodiment. Steps S81 to S90 in FIG. 11 are steps S1 to S10 in FIG. 7. After receiving a reception notification from the communication terminal device 20B, the tag 10 determines whether the communication terminal device 20B with which the tag 10 is able to communicate is the same communication terminal device for the given period or more (step S91). When the communication terminal device 20B with which the tag 10 is able to communicate is the same communication terminal device for the given period or more (step S91: Yes), return to step S83 and continue transmission of the second signal for increasing probability that the tag 10 will be found. On the other hand, when the communication terminal device 20B with which the tag 10 is able to communicate is not the same communication terminal device for the given period or more (step S91: No), the first signal is set as the signal that the tag 10 transmits (step S92).

### Second Embodiment

A second embodiment will be described next. In the second embodiment, in a state of being paired with a communication terminal device of an owner of a tag, the tag transmits a signal in which at least one of a transmission output and frequency of transmission is increased when the tag does not sense presence of another communication terminal device with which the tag is able to communicate after the pairing with the communication terminal device is canceled or after the tag stops sensing presence of the communication terminal device. As described above, as described above, by limiting a signal transmission operation like one that increases power consumption by the tag to the case where the communication terminal device of the owner of the tag is not nearby and the tag does not sense presence of another communication terminal device with which the tag is able to communicate, power consumption of the battery of the tag is reduced when the possibility of stray, theft, or the like, is low.

### Configuration of Position Search System

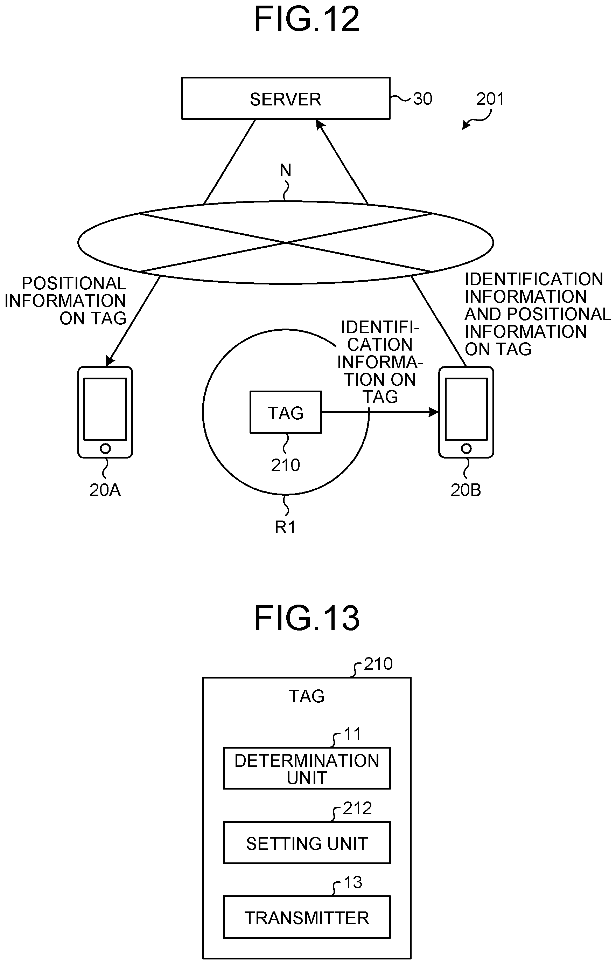

FIG. 12 is a schematic diagram illustrating an entire configuration of a position search system according to the second embodiment. Compared to the position search system 1 illustrated in FIG. 1, a position search system 201 according to the first embodiment includes a tag 210 that transmits a signal containing a tag ID instead of the tag 10.

As for the specification of Bluetooth, it is possible to determine whether there is a terminal device with which communication can be made within a relatively narrow range R1 (in general, within a range of approximately 10 m). Description will be given exemplifying, for example, the case where, when an elderly person or a child who is made carry the tag 210 gets lost and moves to a deserted location, the tag 210 senses that there is not the communication terminal device 20 nearby with which communication can be made using the Bluetooth function.

Like the tag 10, the tag 210 transmits the first signal when the tag 210 senses presence of the communication terminal device 20A with which the tag 210 is paired. When the situation in which the communication terminal device 20 cannot be sensed within the range R1 continues for a given time or more, the tag 210 transmits the second signal for increasing probability of finding.

As described above, in the second embodiment, the tag 210 transmits the normal first signal in a busy location and transmits the second signal in which at least one of the transmission output and frequency of transmission is increased when it is expected that there is no person around, thereby increasing probability that the tag 210 will be found.

### Configuration of Tag

With reference to FIG. 13, the configuration of the tag 210 will be described next. FIG. 13 is a block diagram illustrating an example of the configuration of the tag 210 in the second embodiment. The tag 210 includes a setting unit 212 instead of the setting unit 12 of the tag 10 illustrated in FIG. 2.

The setting unit 212 sets a signal that the tag 210 transmits according to whether there is sensing of the communication terminal device 20. When presence of the communication terminal device 20A is sensed, the setting unit 212 sets the first signal as the signal that the tag 210 transmits.

When it is estimated that a person with the tag 210 has got lost or when it is estimated that a case of steal of a valuable to which the tag 210 is attached has occurred, the setting unit 212 sets the second signal as the signal that the tag 210 transmits.

Specifically, when presence of another communication terminal device (for example, the communication terminal device 20B) with which the tag 210 is able to communicate is not sensed after, in the state of being paired with the communication terminal device 210A of the owner of the tag 210, pairing with the communication terminal device 210A is canceled or after presence of the communication terminal device 20A stops being sensed, the setting unit 212 sets the second signal for increasing the probability that the tag 210 will be found as the signal that the tag 210 transmits.

When presence of another communication terminal device (for example, the communication terminal device 20B) with which the tag 210 is able to communicate is not sensed for a given period (for example, 30 minutes) or more after pairing with the communication terminal device 210A is canceled or after presence of the communication terminal device 20A stops being sensed, the setting unit 212 sets the second signal for increasing probability that the tag 210 will be found as the signal that the tag 10 transmits.

### Position Search Process

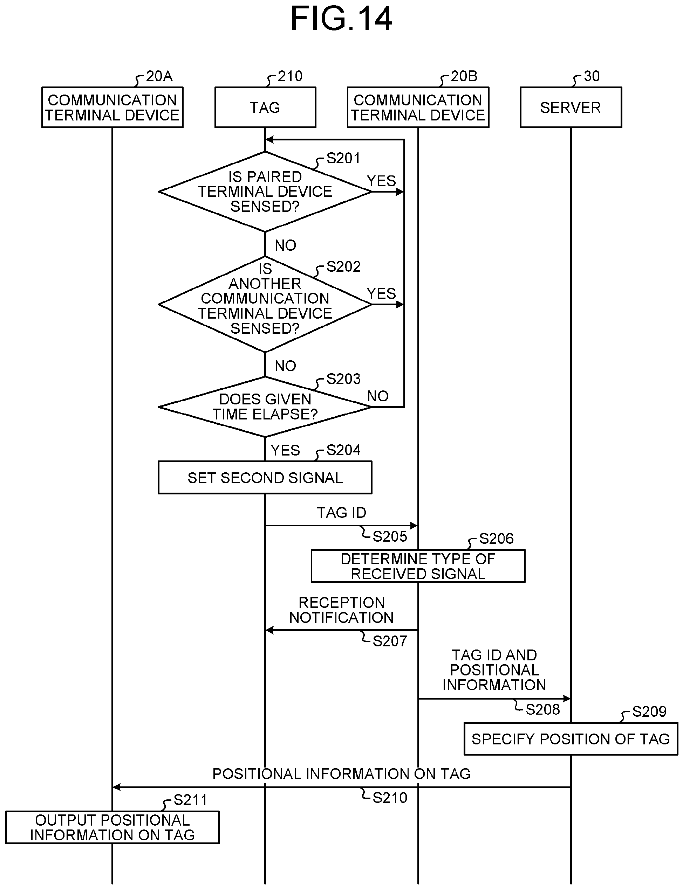

A flow of a series of processes in the position search system 201 will be described next. FIG. 14 is a sequence chart illustrating a process procedure of a position search process according to the first embodiment.

Step S201 illustrated in FIG. 14 is the same process as that of step S1 illustrated in FIG. 7. The first signal is transmitted and, when presence of the communication terminal device 20A is not sensed based on whether there is reception of a reception notification from the communication terminal device 20 to the first signal (step S201: No) or when pairing with the communication terminal device 20A is canceled, the tag 210 transmits the first signal and determines whether presence of another communication terminal device 20 is sensed based on whether there is reception of a reception notification from the communication terminal device 20 to the first signal (step S202).

When presence of another communication terminal device 20 is not sensed (step S202: No), it is determined whether a given time elapses from the state where another communication terminal device 20 is not sensed (step S203).

When presence of another communication terminal device 20 is sensed (step S202: Yes) or when the given time does not elapse in the state in which presence of another communication terminal device 20 is not sensed (step S203: No), return to step S201.

When the given time elapses in the state in which presence of another communication terminal device 20 is not sensed (step S203: Yes), the tag 210 sets the second signal as the signal that the tag 210 transmits (step S204). The tag 210 then transmits the second signal containing the tag ID (step S205). Steps S206 to S211 illustrated in FIG. 14 are the same process as that of steps S5 to S10 illustrated in FIG. 7.

### Effect of Second Embodiment

As described, in the second embodiment, the tag 210 transmits the second signal in which at least one of the transmission output and frequency of transmission is increased when the tag 210 does not sense presence of another communication terminal device 20 after pairing between the tag 210 and the communication terminal device 20A that is paired with the tag 210 is canceled or after the tag 210 stops sensing presence of the communication terminal device 20A. In other words, in the second embodiment, a signal transmission operation like one that increases power consumption by the tag 210 is limited to the case where the communication terminal device 20A of the owner of the tag 210 is not nearby and presence of another communication terminal device 20 is not sensed.

Accordingly, in the second embodiment, by transmitting the second signal for increasing the probability that the tag 210 will be found only when it is estimated that missing of an elderly person or a child with the tag 210 or a case of steal of a bicycle or a valuable to which the tag 10 is attached has occurred, it is possible to efficiently search for the position of the tag 210 while reducing power consumption of a battery of the tag 210.

Note that the tag 210 may set the first signal as the signal that the tag 210 transmits when, after receiving a reception notification from another communication terminal device 20B (step S207), the tag 210 executes steps S71 to S73 in FIG. 10 without determining moving and the distance of moving is short.

The tag 210 may transmit the second signal for increasing probability that the tag 210 will be found when, after receiving a reception notification from another communication terminal device 20B (step S207), steps S91 and S92 in FIG. 11 are executed and accordingly it is determined that the communication terminal device 20 that is near the tag 210 is the same communication terminal device 20 only.

### Modification 1 of Second Embodiment

Description will be given about a modification that is applicable to the case of a configuration in which the GPS is installed in the tag 210 itself or a configuration in which it is sensed whether there is a change in an access point of a wireless LAN that is present around the tag 210.

For example, the case in which a child of which positon is to be searched for shuttles between school and home is assumed. In such a case, the time in which the tag 210 stays at home or school is longer than that in other locations. For this reason, even when the communication terminal device 20B of another person that transmits positional information is not present around the tag 210 in a situation where the communication terminal device 20A of a parent that is paired is not nearby, the tag 210 does not transmit the second signal for increasing probability that the tag 210 will be found at home or school.

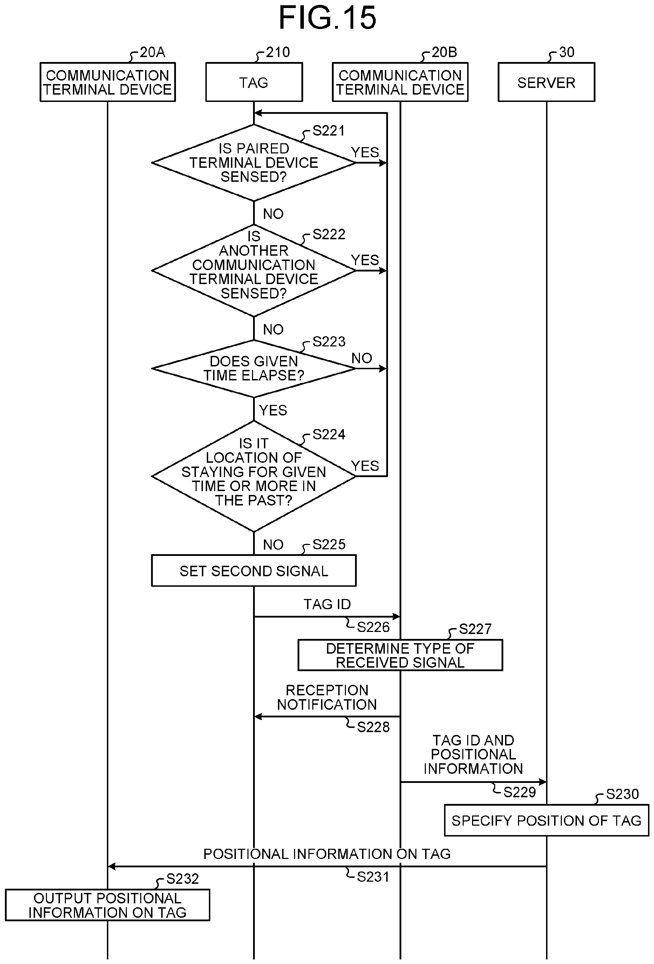

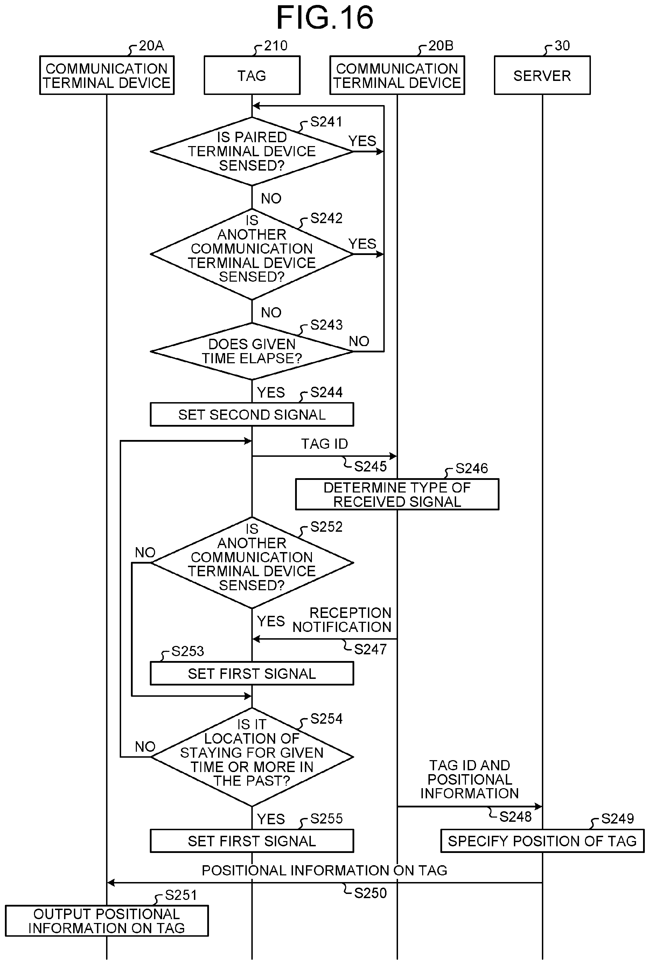

In other words, the tag 210 itself saves locations in which the tag 210 stayed for a given time or more in the past from GPS information or wireless LAN access point information and, when the tag 210 is positioned in a location in which the tag 210 stayed for the given time or more in the past, the tag 210 sets continuation of transmission of not the second signal for increasing probability that the tag 210 will be found but the first signal. Accordingly, the tag 210 transmits the second signal for increasing probability that the tag 210 will be found only on the way of a shuttle from home or school, which makes it possible to reduce consumption of the battery. The process search method in these cases will be described with reference to FIG. 15 and FIG. 16.

FIG. 15 is a sequence hart illustrating a process procedure of the position search process according to Modification 1 of the second embodiment. Steps S221 to S223 illustrated in FIG. 15 are the same process as that of steps S201 to S203 illustrated in FIG. 14.

When the given time elapses in the state in which presence of another communication terminal device 20 is not sensed (step S223: Yes), the tag 210 determines whether the tag 210 is positioned in a location in which the tag 210 stayed form the given time or more (step S224).

When the tag 210 is positioned in a location where the tag 210 stayed for the given time or more in the past (step S224: Yes), return to step S221 and the tag 210 continues transmission of the first signal. When the tag 210 is not positioned in a location where the tag 210 stayed for the given time or more in the past (step S224: No), set the second signal as the signal that the tag 210 transmits (step S225). Steps S226 to S232 in FIG. 15 are the same process as that of steps S4 to S10 illustrated in FIG. 7.

FIG. 16 is a sequence chart illustrating another process procedure of the position search process according to Modification 1 of the second embodiment. Steps S241 to S251 illustrated in FIG. 16 are the same process as that of steps S201 to S211 illustrated in FIG. 14.

The tag 210 determines whether presence of another communication terminal device 20 is sensed based on whether there is reception of a reception notification from the communication terminal device 20B (step S252). On receiving the reception notification from the communication terminal device 20B (step S247) and sensing presence of another communication terminal device 20 (Step S252: Yes), the tag 210 sets the first signal as the signal that the tag 210 transmits (step S253) and goes to step S254.

When presence of another communication terminal device 20 is not sensed (step S252: No), the tag 210 determines whether the tag 210 is positioned in a location where the tag 210 stayed for a given time or more in the past (step S254). When the tag 210 is positioned in a location where the tag 210 stayed for the given time or more in the past (step S254: Yes), set the first signal as the signal that the tag 210 transmits (step S255) and return to step S241. When the tag 210 is not positioned in a location where the tag 210 stayed for the given time or more in the past (step S254: No), return to step S245 where the tag 210 continues transmission of the second signal.

### Third Embodiment

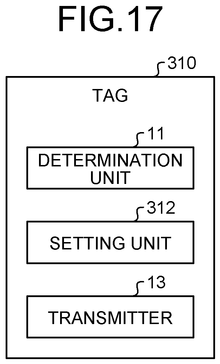

A third embodiment will be described next. In the third embodiment, an example in which the first embodiment and the second embodiment are combined will be described. FIG. 17 is a block diagram illustrating an example of the configuration of a tag in the third embodiment.

As illustrated in FIG. 17, a tag 310 in the third embodiment includes a setting unit 312 instead of the setting unit 12 of the tag 10 illustrated in FIG. 2.

When presence of the communication terminal device 20A is sensed, the setting unit 312 sets the first signal as a signal that the tag 310 transmits. When presence of another communication terminal device 20 (the second communication terminal device) with which the tag 310 is able to communicate is not sensed after pairing with the communication terminal device 20A is canceled or presence of the communication terminal device 20A stops being sensed, the setting unit 312 sets the second signal as the signal that the tag 310 transmits.

### Position Search Process

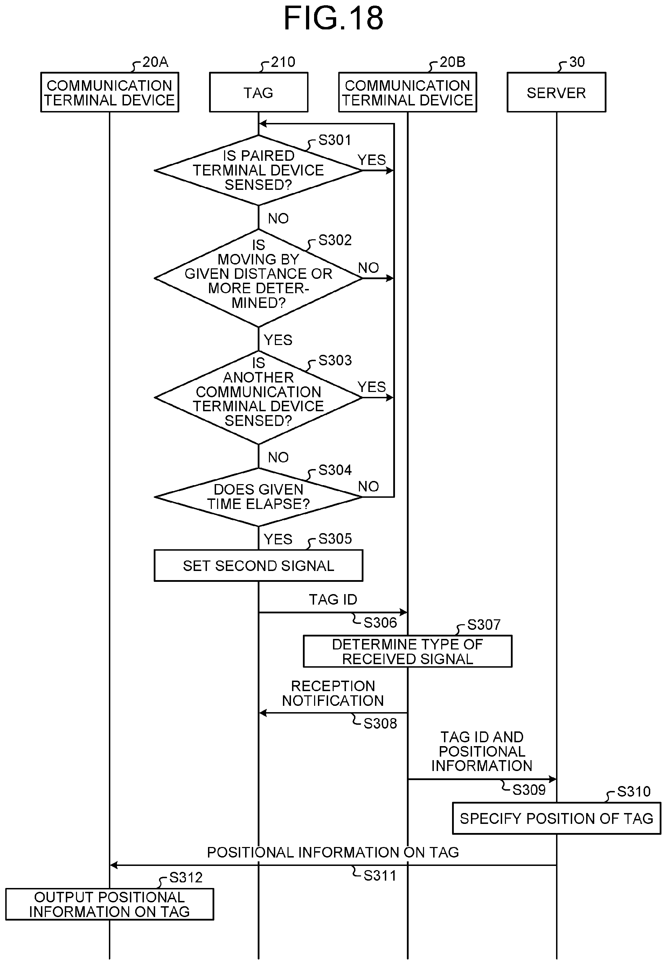

FIG. 18 is a sequence chart illustrating a process procedure of a position search process according to the third embodiment. Steps S301 and S302 illustrated in FIG. 18 are the same process as that of steps S1 and S2 illustrated in FIG. 7. Steps S303 and S304 illustrated in FIG. 18 are the same process as that of steps S202 and S203 illustrated in FIG. 14. Steps S305 to S312 are the same process as that of steps S3 to S10 illustrated in FIG. 7.

By limiting conditions for transmission of the second signal more than in the first and second embodiments as in the third embodiment, power consumption of a battery of the tag 310 may be reduced.

As for signals that are transmitted from the tags 10, 210 and 310 in operations of the tags 10, 210 and 310 for increasing probability of finding, a signal with a high output and a signal with a low output may be used together. When the communication terminal device 20B receives a signal with a high output, the server 30 may notify the owner of the tags 10, 210 and 310 of a rough position and, when the communication terminal device 20B receives a signal with a low output, the server 30 may notify the owner of the tags 10, 210 and 310 of a pinpoint position. As for frequency of signal transmission, the tags 10, 210 and 310 may make transmissions in different sets of frequency between a signal with a high output and a signal with a low output.

### System Configuration, etc.

Each component of each device illustrated in the drawings is a functional idea and need not necessarily be configured physically as illustrated in the drawings. In other words, specific modes of distribution and integration of devices are not limited to those illustrated in the drawings and all or part of the devices can be configured by functional or physical distribution or integration in any unit according to various types of load and usage. Furthermore, all or given part of each processing function implemented by each device can be realized by a CPU or a program that is analyzed and executed by the CPU or can be realized as hardware according to a wired logic.

Among the processes described in the above-described embodiments, all or part of the process that is described as one performed automatically can be performed manually or all or part of the process that is described as one performed manually can be performed automatically by a known method. In addition to this, the process procedures, the control procedures, the specific names, and the information including various types of data and parameters that are presented in the description above and the drawings are changeable freely unless otherwise noted.

### Program

It is possible to create a program in which the processes that the communication terminal device 20 and the server 30 described in the above-described embodiments execute are written in a computer-executable language. For example, it is also possible to create a position search program in which the processes that the communication terminal device 20 and the server 30 according to the embodiment are written in a computer-executable language. In his case, a computer executes the position search program, making it possible to obtaining the same effect as that of the above-described embodiments. Furthermore, the position search program may be recorded in a computer-readable recording medium and a computer may be caused to read and execute the position search program that is recorded in the recording medium, thereby realizing the same processes as those of the above-described embodiments.

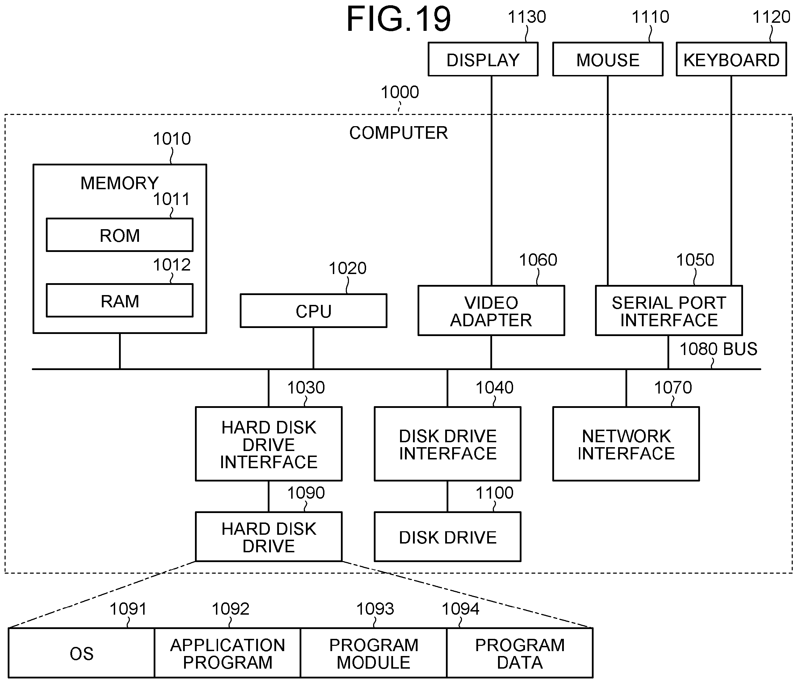

FIG. 19 is a diagram illustrating a computer that executes the position search program. As exemplified in FIG. 19, a computer 1000 includes, for example, a memory 1010, a CPU (Central Processing Unit) 1020, a hard disk drive interface 1030, a disk drive interface 1040, a serial port interface 1050, a video adapter 1060, and a network interface 1070. Each of these units is connected via a bus 1080.

As exemplified in FIG. 19, the memory 1010 includes a ROM (Read Only Memory) 1011 and a RAM 1012. The ROM 1011 stores, for example, a boot program, such as a BIOS (Basic Input Output System). As exemplified in FIG. 19, the hard disk drive interface 1030 is connected to a hard disk drive 1090. The disk drive interface 1040 is connected to a disk drive 1100 as exemplified in FIG. 19. For example, a detachable recording medium, such as a magnetic disk or an optical disk, is inserted into the disk drive 1100. The serial port interface 1050 is connected to, for example, a mouse 1110 and a keyboard 1120 as exemplified in FIG. 19. The video adapter 1060 is connected to, for example, a display 1130 as exemplified in FIG. 19.

As exemplified in FIG. 19, the hard disk drive 1090 stores, for example, an OS 1091, an application program 1092, a program module 1093, and program data 1094. In other words, the above-described program is stored in, for example, the hard disk drive 1090 as a program module in which instructions to be executed by the computer 1000 are written.

The various types of data described in the above-described embodiments are stored in, for example, the memory 1010 and the hard disk drive 1090 as program data. The CPU 1020 reads the program module 1093 and the program data 1094 that are stored in the memory 1010 and the hard disk drive 1090 to the RAM 1012 as requested and executes various types of process procedure.

Note that the program module 1093 and the program data 1094 according to the position search program are not limited to being stored in the hard disk drive 1090, and the program module 1093 and the program data 1094 may be stored in, for example, a detachable storage medium and may be read by the CPU 1020 via the disk drive, or the like. Alternatively, the program module 1093 and the program data 1094 according to the position search program may be stored in another computer that is connected via a network (such as a LAN (Local Area Network) or a WAN (Wide Area Network)) and may be read by the CPU 1020 via the network interface 1070.

As included in the technique that the present application discloses, the above-described embodiments and modifications thereof are included in the invention described in CLAIMS and equivalents of the invention.

### [Explanation of Reference]

1, 201 POSITION SEARCH SYSTEM
10, 210, 310 TAG
11 DETERMINATION UNIT
12, 212, 312 SETTING UNIT
13 TRANSMITTER
20, 20A, 20B COMMUNICATION TERMINAL DEVICE
21, 31 COMMUNICATION PROCESSING UNIT
22, 32 CONTROLLER
22a RECEIVING UNIT
22b RECEIVER
22c NOTIFICATION UNIT
23, 33 STORAGE UNIT
30 SERVER
32a COLLECTING UNIT
32b SPECIFYING UNIT
32c OUTPUT UNIT
33a POSITIONAL INFORMATION STORAGE UNIT

## Claims

1. A position search system comprising a tag that transmits a signal containing identification information; a plurality of communication terminal devices that receive the signal that the tag transmits; and a server that collects information from a communication terminal device that receives the signal that the tag transmits,
wherein the tag includes
a setting unit configured to set a first signal as the signal that the tag transmits when the tag senses presence of a first communication terminal device that is paired with the tag among the communication terminal devices or when the tag is able to sense presence of a second communication terminal device with which the tag is able to communicate after pairing with the first communication terminal device is canceled or after the tag stops sensing presence of the first communication terminal device, and set a second signal in which at least one of a transmission output and frequency of transmission is increased more than that in the first signal when the tag does not sense presence of the second communication terminal device with which the tag is able to communicate after pairing with the first communication terminal device is canceled or after the tag stops sensing presence of the first communication terminal device; and
a transmitter configured to transmit the signal that is set by the setting unit,
the communication terminal device includes
a receiver configured to receive the signal that is transmitted from the tag; and
a notification unit configured to notify the server of the identification information on the tag that is contained in the signal that is received from the tag and positional information on the communication terminal device at reception of the signal, and
the server includes
a collecting unit configured to collect the identification information on the tag and the positional information from the communication terminal devices;
a specifying unit configured to specify a position of the tag using the positional information that is collected by the collecting unit; and
an output unit configured to output information on the position of the tag that is specified by the specifying unit.

2. The position search system according to claim 1, wherein the setting unit sets the second signal as the signal that the tag transmits when presence of the second communication terminal device with which the tag is able to communicate is not sensed for a given period or more after pairing with the first communication terminal device is canceled or after presence of the first communication terminal device stops being sensed.

3. The position search system according to claim 1 or 2, wherein the tag further includes a determination unit configured to determine whether there is moving of the tag by determining the position or moving of the tag,
the setting unit sets the first signal as the signal that the tag transmits when the second signal is transmitted, presence of the second communication terminal device with which the tag is able to communicate is not sensed, and the tag is positioned in a location where the tag stayed for a given time or more in past.

4. The position search system according to any one of claims 1 to 3, wherein the setting unit sets, as the signal that the tag transmits, the second signal in which at least one of a transmission output of and frequency of transmission of the second signal is increased according to a length of a period in which presence of the second communication terminal device is not sensed.

5. A position search method that a position search system including a tag that transmits a signal containing identification information; a plurality of communication terminal devices that receive the signal that the tag transmits; and a server that collects information from a communication terminal device that receives the signal that the tag transmits executes, the position search method comprising:
a setting step of, by the tag, setting a first signal as the signal that the tag transmits when the tag senses presence of a first communication terminal device that is paired with the tag among the communication terminal devices or when the tag is able to sense presence of a second communication terminal device with which the tag is able to communicate after pairing with the first communication terminal device is canceled or after the tag stops sensing presence of the first communication terminal device and setting a second signal in which at least one of a transmission output and frequency of transmission is increased more than that in the first signal when the tag does not sense presence of the second communication terminal device with which the tag is able to communicate after pairing with the first communication terminal device is canceled or after the tag stops sensing presence of the first communication terminal device; and
a transmitting step of, by the tag, transmitting the signal that is set at the setting step;
a receiving step of, by the communication terminal device, receiving the signal that is transmitted from the tag;
a notifying step of, by the communication terminal device, notifying the server of the identification information on the tag that is contained in the signal that is received from the tag and positional information on the communication terminal device at reception of the signal;
a collecting step of, by the server, collecting the identification information on the tag and the positional information from the communication terminal devices;
a specifying step of, by the server, specifying a position of the tag using the positional information that is collected at the collecting step; and
an outputting step of, by the server, outputting information on the position of the tag that is specified at the specifying step.
